# EUROPEAN PATENT APPLICATION

(11) **EP 4 706 940 A1**
(43) Date of publication of application: **11.03.2026**
(21) Application number: 24823699.4
(22) Date of filing: 12.06.2024
(51) Int. Cl.: B29C 53/06, B29C 53/80, B29C 65/10, B29C 65/78, B29D 99/00, H01M 50/105, B29C 65/00, B29L 31/00

(54) **POUCH MANUFACTURING METHOD AND POUCH MANUFACTURING APPARATUS**

(30) Priority: 14.06.2023 KR 20230076325; 11.06.2024 KR 20240075554
(71) Applicant: LG Energy Solution, Ltd., Seoul 07335 (KR)
(72) Inventor: KIM, Wan Ju, Daejeon 34122 (KR); KOO, Sang Hyun, Daejeon 34122 (KR); LEE, Ji Hoon, Daejeon 34122 (KR)
(74) Representative: Plasseraud IP
(86) International application number: PCT/KR2024/008065
(87) International publication number: WO 2024/258181

(57) **Abstract**

The present disclosure relates to a pouch manufacturing method and a pouch manufacturing device, and the pouch manufacturing method according to the present disclosure includes a seating process of seating a pouch sheet on a seating jig; a support process of pressing and supporting the pouch sheet through a support jig located on the opposite side with the pouch sheet interposed therebetween with respect to the seating jig; and a folding process of securing the pouch sheet through the seating jig and the support jig in the support process, and then moving a plurality of folding jigs and folding the pouch sheet seated on the seating jig to form a receiving portion in which the electrode assembly is accommodated.

## Description

### TECHNICAL FIELD

### CROSS-REFERENCE TO RELATED APPLICATIONS

The present application claims priority to Korean Patent Application No. 10-2023-0076325 filed on June 14, 2023 and Korean Patent Application No. 10-2024-0075554 filed on June 11, 2024 in the Republic of Korea, the disclosures of which are incorporated herein by reference.

### TECHNICAL FIELD

The present disclosure relates to a pouch manufacturing method and a pouch manufacturing device.

### BACKGROUND ART

Unlike primary batteries, secondary batteries are capable of being recharged and have been heavily researched and developed in recent years due to their possibility of compactness and large capacity. As the technology development and demand for mobile devices increase, demand for secondary batteries as an energy source is rapidly increasing.

Secondary batteries are classified into coin type batteries, cylindrical batteries, prismatic batteries, and pouch type batteries depending on the shape of a battery case. In a secondary battery, the electrode assembly mounted inside the battery case is a power generating element capable of being charged and discharged with a stacked structure of electrodes and separators.

The electrode assembly may be roughly classified into a jelly-roll type in which a sheet-like positive electrode and negative electrode coated with an active material having a separator interposed therebetween are wound, a stack type in which a plurality of positive electrodes and negative electrodes are sequentially stacked with a separator interposed therebetween, and a stack/folding type in which the unit cells of the stack type are wound with a long separation film.

Recently, a pouch type battery having a structure in which a stack type or a stack/ folding type electrode assembly is embedded in a pouch type battery case made of aluminum laminated sheets, is attracting much attention due to its low manufacturing cost, small weight and easy shape deformation, and the usage thereof is gradually increasing.

In the pouch type battery cell, the higher the number of stacks of electrodes, the higher the energy density, which increases the efficiency of the product. As the demand for automotive batteries continues to increase, and the energy density of batteries becomes a very important indicator for determining the performance of electric vehicles, the demand for high-stack cells is also increasing. Additionally, as the number of stacks increases, the thickness of the cells becomes thicker, and the molding depth that forms the receiving portion of the pouch for packaging them should also become deeper. However, the moldable depth is significantly limited by the material properties of the pouch. In particular, in the process of forming the receiving portion while pressing the pouch with a punch, there is a problem that the pouch is stretched, damaged and broken, which limits the molding depth of the receiving portion and makes it difficult to form the receiving portion in the pouch to accommodate high-stack cells with a large number of stacks. Therefore, in order to increase the number of stacks of electrodes beyond the current level, there is a need to improve the molding method of the pouch including the same.

### SUMMARY

### TECHNICAL PROBLEM

The present disclosure is directed to providing a pouch manufacturing method and a pouch manufacturing device with no limit to the forming depth for accommodating the electrode assembly and without causing forming stretching issues.

### TECHNICAL SOLUTION

A pouch manufacturing method according to an embodiment of the present disclosure may include a seating process of seating a pouch sheet on a seating jig; a support process of pressing and supporting the pouch sheet through a support jig located on the opposite side with the pouch sheet interposed therebetween with respect to the seating jig; and a folding process of securing the pouch sheet through the seating jig and the support jig in the support process, and then moving a plurality of folding jigs and folding the pouch sheet seated on the seating jig to form a receiving portion in which the electrode assembly is accommodated.

Additionally, a pouch manufacturing device according to an embodiment of the present disclosure may include a seating jig on which the pouch sheet is seated; a support jig that presses and supports the pouch sheet on the opposite side with the pouch sheet interposed therebetween with respect to the seating jig; and a plurality of folding jigs that fold the pouch sheet seated on the seating jig to form a receiving portion in which the electrode assembly is accommodated, after securing the pouch sheet through the seating jig and the support jig.

### ADVANTAGEOUS EFFECTS

According to the present disclosure, as a receiving portion in which the electrode assembly is accommodated is formed by folding the pouch sheet, there is no limit to the forming depth for accommodating the electrode assembly, and there is no forming stretching issue. Therefore, a receiving portion capable of accommodating a high-stack electrode assembly with a large number of stacks may be easily formed in the pouch sheet, thereby making it possible to manufacture a high-stack secondary battery.

Additionally, a receiving portion may be easily formed in the pouch sheet by folding the pouch sheet through a plurality of folding jigs.

Also, it is possible to prevent the pouch sheet from being wrinkled during folding by moving the plurality of folding jigs first rather than the support jig that presses and secures the pouch sheet.

And, when folding the pouch sheet, hot air is applied to the overlapping sections to thermally fuse them, thereby preventing the unraveling of folding after folding the pouch sheet and firmly maintaining the shape in which the receiving portion is formed.

### BRIEF DESCRIPTION OF THE DRAWINGS

FIG. 1 is a cross-sectional view showing a seating process in a pouch manufacturing method according to an embodiment of the present disclosure.
FIG. 2 is a cross-sectional view showing a support process in a pouch manufacturing method according to an embodiment of the present disclosure.
FIG. 3 is a cross-sectional view showing a state in which a pouch sheet is folded through a folding jig in a pouch manufacturing method according to an embodiment of the present disclosure.
FIG. 4 is a plan view schematically showing a bending line of a pouch sheet in a pouch manufacturing method according to an embodiment of the present disclosure.
FIG. 5 is a front perspective view showing a state in which a pouch sheet has been completely folded through a folding jig in a pouch manufacturing method according to an embodiment of the present disclosure.
FIG. 6 is a rear perspective view showing a state in which a pouch sheet has been completely folded through a folding jig in a pouch manufacturing method according to an embodiment of the present disclosure.
FIG. 7 is a perspective view showing a support jig in a pouch manufacturing method according to an embodiment of the present disclosure.
FIG. 8 is a perspective view showing a state in which a pair of first jigs are moved in the folding process of a pouch manufacturing method according to an embodiment of the present disclosure.
FIG. 9 is a perspective view showing a state in which a pair of second jigs are moved in the folding process of a pouch manufacturing method according to an embodiment of the present disclosure.
FIG. 10 is a perspective view showing a heating process in a pouch manufacturing method according to an embodiment of the present disclosure.
FIG. 11 is a front perspective view showing an example of a pouch sheet folded by a pouch manufacturing method according to an embodiment of the present disclosure.
FIG. 12 is a rear perspective view showing an example of a pouch sheet folded by a pouch manufacturing method according to an embodiment of the present disclosure.
FIG. 13 is a front perspective view showing another example of a pouch sheet folded by a pouch manufacturing method according to an embodiment of the present disclosure.
FIG. 14 is a reference view showing a use state in which an electrode assembly is accommodated in a pouch manufacturing method according to an embodiment of the present disclosure.

### DETAILED DESCRIPTION

The objectives, specific advantages, and novel features of the present disclosure will become more apparent from the following detailed description and preferred embodiments in connection with the accompanying drawings. It should be noted that in affixing the reference numerals to the elements in each drawing in this specification, the identical reference numerals are affixed to the identical elements as much as possible even if they are shown in different drawings. Additionally, the present disclosure may be embodied in many different forms and is not limited to the embodiments described herein. And, in describing the present disclosure, detailed descriptions of related known technologies that may unnecessarily obscure the gist of the present disclosure will be omitted.

### Pouch manufacturing method according to embodiment

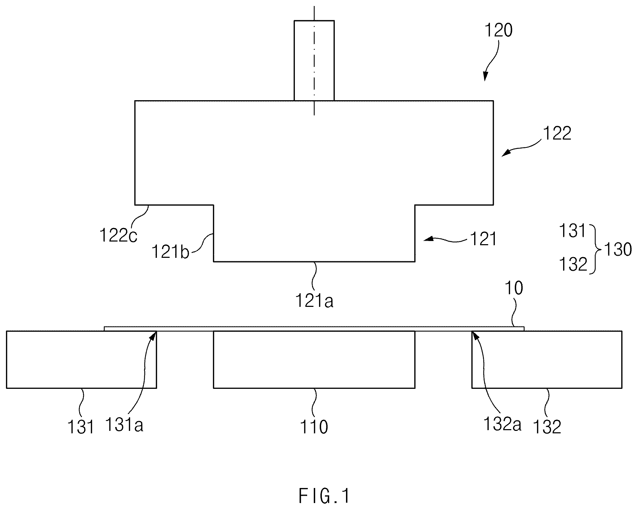

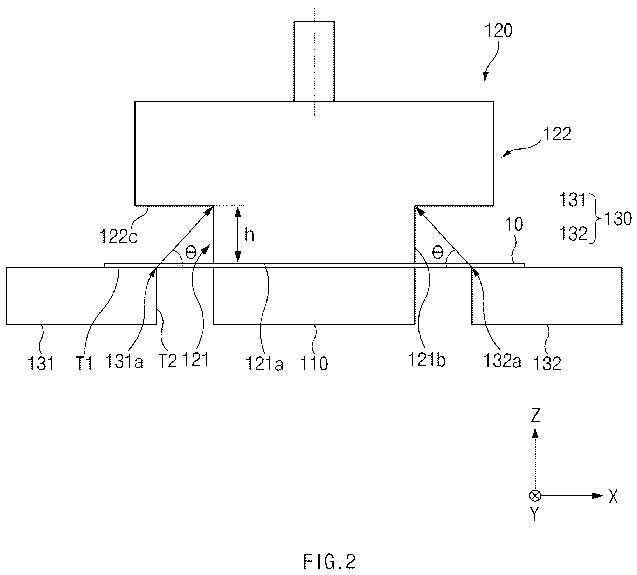

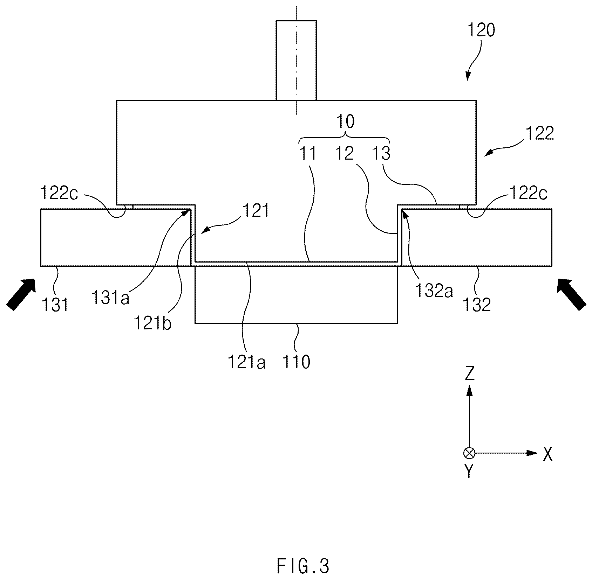

FIG. 1 is a cross-sectional view showing a seating process in a pouch manufacturing method according to an embodiment of the present disclosure, FIG. 2 is a cross-sectional view showing a support process in a pouch manufacturing method according to an embodiment of the present disclosure, and FIG. 3 is a cross-sectional view showing a state in which a pouch sheet is folded through a folding jig in a folding process of a pouch manufacturing method according to an embodiment of the present disclosure.

Referring to FIGS. 1 to 3, the pouch manufacturing method according to an embodiment of the present disclosure may include a seating process of seating a pouch sheet 10 on a seating jig 110; a support process of pressing and supporting the pouch sheet 10 through a support jig 120 located on the opposite side with the pouch sheet 10 interposed therebetween with respect to the seating jig 110; and a folding process of securing the pouch sheet 10 through the seating jig 110 and the support jig 120 in the support process, and then moving a plurality of folding jigs 130 and folding the pouch sheet 10 seated on the seating jig 110 to form a receiving portion 14 in which the electrode assembly is accommodated. Additionally, the pouch manufacturing method according to an embodiment of the present disclosure may further include a heating process of thermally fusing the overlapping portions of the pouch sheet 10.

Referring to FIG. 1, more specifically, in the seating process, the pouch sheet 10 is seated on the seating jig 110.

Additionally, in the seating process, the pouch sheet 10 may be seated, as one example, on the upper surface of the seating jig 110.

Also, in the seating process, the pouch sheet 10 may be seated, as another example, on the upper surface of the seating jig 110 and the upper surface of the folding jig 130. In this case, in the seating process, the pouch sheet 10 may be seated so that the lower surface of the center portion of the pouch sheet 10 is in contact with the upper surface of the seating jig 110.

The pouch sheet 10 may include a metal layer, and a resin layer laminated to the outer and inner sides of the metal layer. The metal layer may include, for example, an aluminum sheet. The resin layer may include, for example, a polypropylene (PP) material.

Referring to FIG. 2, in the support process, the pouch sheet 10 is pressed and supported through the support jig 120 located on the opposite side with the pouch sheet 10 interposed therebetween with respect to the seating jig 110 so that the pouch sheet 10 folded in the folding process is not separated. For example, the support process may be performed prior to the folding process. Specifically, for example, the support process may be performed prior to the folding process and continued during the folding process.

In the support process, the pouch sheet 10 may be secured to the seating jig 110 by pressing the upper surface of the pouch sheet 10 through the support jig 120. That is, as the protrusion 121 of the support jig 120 presses the upper surface of the pouch sheet 10 through the support process, the upper surface of the seating jig 110 located at the lower portion of the pouch sheet 10 presses the lower surface of the pouch sheet 10, thereby securing the pouch sheet 10 when it is folded.

And, after securing the center portion of the pouch sheet 10 through the seating jig 110 and the support jig 120 in the support process, the folding process may be performed to fold the edge of the pouch sheet 10 through the folding jig 130. Accordingly, as the folding process is performed while the center portion of the pouch sheet 10 is secured through the support process, the center portion of the pouch sheet 10 is secured to prevent movement when folding the edge of the pouch sheet 10, thereby minimizing wrinkling of the pouch sheet 10 that may occur during folding.

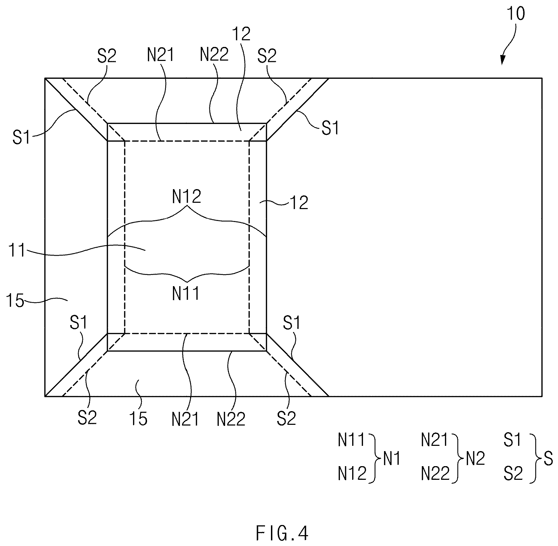

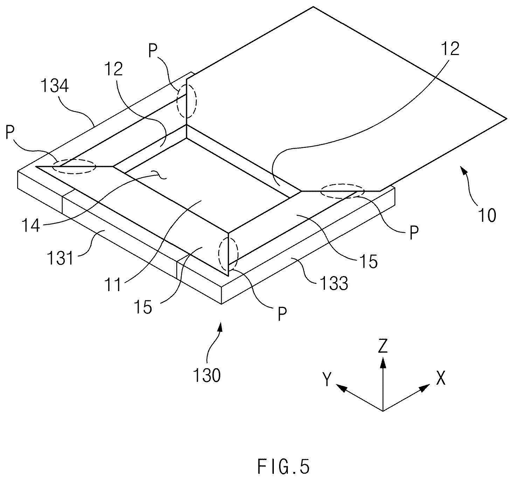

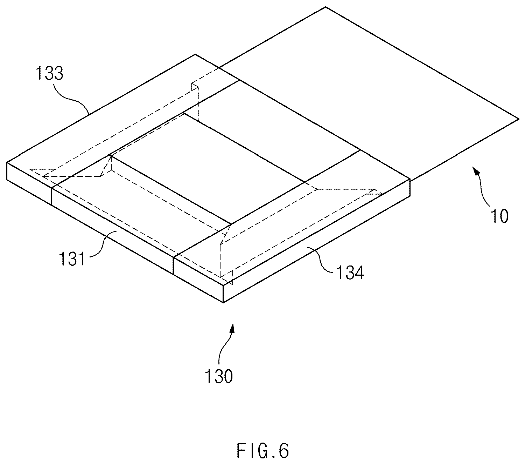

FIG. 4 is a plan view schematically showing bending lines of a pouch sheet in a pouch manufacturing method according to an embodiment of the present disclosure, and FIG. 5 is a front perspective view showing a state in which a pouch sheet has been completely folded through a folding jig in a pouch manufacturing method according to an embodiment of the present disclosure. Here, FIG. 5 shows a state in which the support jig is separated. Additionally, FIG. 6 is a rear perspective view showing a state in which a pouch sheet has been completely folded through a folding jig in a pouch manufacturing method according to an embodiment of the present disclosure.

Referring to FIGS. 3 to 6, in the folding process, after securing the pouch sheet 10 through the seating jig 110 and the support jig 120 in the support process, the plurality of folding jigs 130 are moved and the pouch sheet 10 seated on the seating jig 110 is folded to form a receiving portion 14 in which the electrode assembly is accommodated.

Additionally, in the folding process, the plurality of folding jigs 130 located in the lateral direction of the seating jig 110 may be moved and the edge of the pouch sheet 10 may be folded to form the receiving portion 14. Here, the edge of the pouch sheet 10 refers to the outer portion of the receiving portion 14, which may be, for example, a terrace 15.

Also, in the folding process, the plurality of folding jigs 130 may be moved in a direction closer to each other to fold the pouch sheet 10, wherein the plurality of folding jigs 130 may be moved in an upward diagonal direction to fold the pouch sheet 10.

And, in the folding process, the plurality of folding jigs 130 may be moved at an angle of 45 to 85° based on the plane of the pouch sheet 10. Here, in the folding process, the plurality of folding jigs 130 may be moved an angle of a lower limit of 45° or more based on the plane of the pouch sheet 10, so that wrinkling of the pouch sheet 10 may be minimized or prevented when the pouch sheet 10 is folded. On the other hand, in the folding process, the plurality of folding jigs 130 may be moved an angle of an upper limit of 85° or less based on the plane of the pouch sheet 10, so that damage to the pouch sheet 10 such as tearing may be prevented when the pouch sheet 10 is folded.

Additionally, in the folding process, the protrusion 121 is formed in a shape where the lower portion of the support jig 120 corresponds to the receiving portion 14, so that when the pouch sheet 10 is folded by the folding jig 130, the folded portion of the pouch sheet 10 may be in close contact with the protrusion 121 of the support jig 120.

The folding jig 130 may include an upper pressing surface T1 in contact with the edge of the pouch sheet 10, a side pressing surface T2 formed perpendicular to the upper pressing surface T1, and edge portions 131a, 132a formed between the upper pressing surface T1 and the side pressing surface T2.

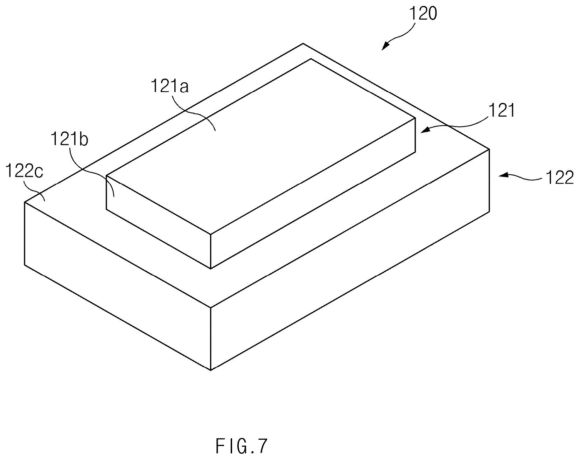

FIG. 7 is a perspective view showing a support jig 120 in a pouch manufacturing method according to an embodiment of the present disclosure.

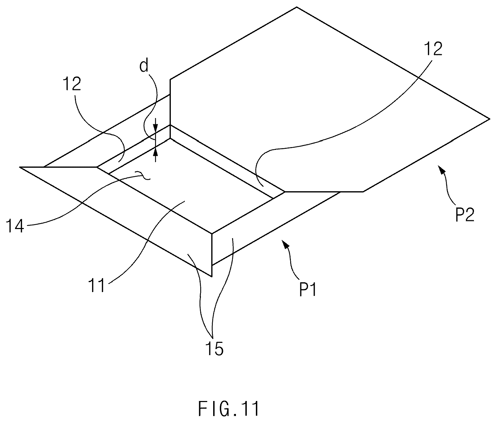

Referring to FIGS. 2 to 4 and FIG. 7, the support jig 120 may include a body 122 and a protrusion 121 formed to protrude from the lower portion of the body 122. The protrusion 121 may include a first surface 121a forming a lowermost surface and a second surface 121b forming a lateral surface, and the body 122 may include a third surface 122c forming a lower surface along the edge of the protrusion 121. Here, the protrusion 121 may be formed, for example, as a rectangular prism. And, the height h of the protrusion 121 may correspond to the forming depth d that forms the receiving portion 14 of the pouch sheet 10 (see FIGS. 2 and 11).

In the folding process, as the folding jig 130 folds the pouch sheet 10 and brings it into close contact with the lower portion of the body 122, the receiving portion 14 may be formed in the pouch sheet 10. And, the receiving portion 14 of the pouch sheet 10 formed through the folding process may include a bottom surface 11 formed on a surface facing the first surface 121a of the protrusion 121 and a wall surface 12 formed on a surface facing the second surface 121b of the protrusion 121, and a terrace 15 facing the third surface 122c may be formed along the edge of the receiving portion 14. Here, the receiving portion 14 formed on the pouch sheet 10 may be formed in a shape corresponding to the protrusion 121, and may form, for example, a rectangular prism groove that is open upward.

In this case, in the folding process, when the folding jig 130 is moved diagonally and the pouch sheet 10 is brought into close contact with the support jig 120, the pouch sheet 10 is bent by the edge portions 131a, 132a of the folding jig 130, the edge of the pouch sheet 10 is brought into close contact with the third surface 122c of the body 122 in the support jig 120 through the upper pressing surface T1, and a portion of the pouch sheet 10 may be brought into close contact with the second surface 121b of the body 122 in the support jig 120 through the side pressing surface T2.

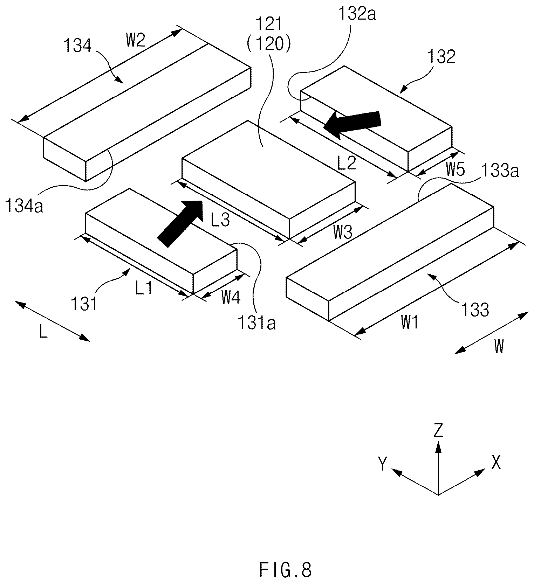

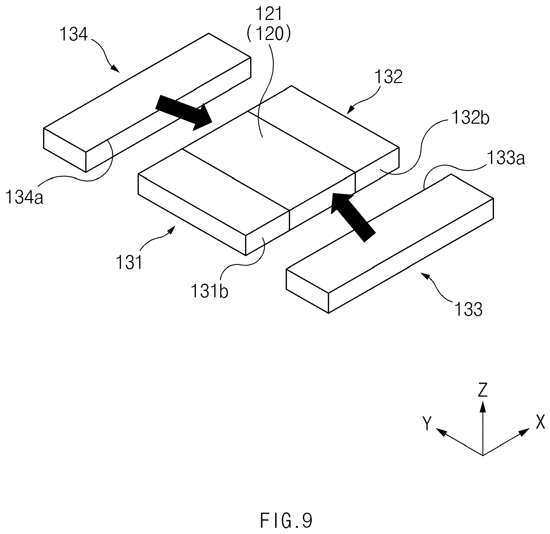

FIG. 8 is a perspective view showing a state in which a pair of first jigs are moved in the folding process of a pouch manufacturing method according to an embodiment of the present disclosure, and FIG. 9 is a perspective view showing a state in which a pair of second jigs are moved in the folding process of a pouch manufacturing method according to an embodiment of the present disclosure. Here, in FIGS. 8 and 9, the pouch sheet 10 and the body 122 of the support jig 120 are omitted, and only the folding jig 130 and the protrusion 121 of the support jig 120 are shown.

Referring to FIGS. 4, 5, 8 and 9, the plurality of folding jigs 130 may include a pair of first jigs 131, 132 located on both sides of the support jig 120 in any one direction of the width direction and the length direction, and a pair of second jigs 133, 134 located on both sides of the support jig 120 in the other direction of the width direction and the length direction.

And, the pouch sheet 10 may be bent along the first bending line N1 through the pair of first jigs 131, 132. Additionally, the pouch sheet 10 may be bent along the second bending line N2 through the pair of second jigs 131, 132. In this case, while being bent along the second bending line N2 through the pair of second jigs 131, 132, the pouch sheet 10 may be bent together along the diagonal bending line S.

Here, the first bending line N1 may include a first inner bending line N11 and a second outer bending line N12. In this case, for example, the first inner bending line N11 may be formed as a line bending in the inward direction, and the second outer bending line N12 may be formed as a line bending in the outward direction. Here, for example, the inward direction may be a direction in which both sides of the pouch sheet 10 to be bent are closer to each other, and the outward direction may be a direction in which both sides of the pouch sheet 10 to be bent are farther away from each other.

The second bending line N2 may include a second inner bending line N21 and a second outer bending line N22. In this case, for example, the second inner bending line N21 may be formed as a line bending in the inward direction, and the second outer bending line N22 may be formed as a line bending in the outward direction.

The diagonal bending line S may include an outer diagonal bending line S1 and an inner diagonal bending line S2. In this case, for example, the outer diagonal bending line S1 may be formed as a line bending in the inward direction, and the outer diagonal bending line S1 may be formed as a line bending in the outward direction. Here, for example, the folding process may include a pre-folding process of forming the diagonal bending line S before folding the pouch sheet 10. In this case, for example, in the pre-folding process, the pouch sheet 10 may be temporarily bent so that the diagonal bending line S is formed in the pouch sheet 10 through a pre-folding jig (not shown). At this time, for example, in the pre-folding process, the pouch sheet 10 may be temporarily folded so that only a line shape of the diagonal bending line S is formed, rather than being completely bent. Accordingly, wrinkling may be more minimized when folding the pouch sheet 10, and folding may be easily performed.

The folding process may include a first folding process in which the pair of first jigs 131, 132 are moved to first contact the protrusion 121 of the support jig 120 with the pouch sheet 10 interposed therebetween, and a second folding process in which the pair of second jigs 133, 134 are moved after the first folding process. Here, in the folding process, the pouch sheet 10 may be folded by moving the pair of first jigs 131, 132 and the pair of second jigs 133, 134 in the upward diagonal direction as described above.

In this case, the pouch sheet 10 may be bent and folded by the edge portions 131a, 132a of the pair of first jigs 131, 132 and the edge portions 133a, 134a of the pair of second jigs 133, 134. Here, the pouch sheet 10 may be bent along the first outer bending line N12 by the edge portions 131a, 132a of the pair of first jigs 131, 132, and the pouch sheet 10 may be bent along the second outer bending line N22 by the edge portions 133a, 134a of the pair of second jigs 133, 134.

The lengths L1, L2 of the first jigs 131, 132 may correspond to the length L3 of the protruding portion 121 of the support jig 120 facing the first jigs 131, 132. That is, the lengths L1, L2 of the first jigs 131, 132 in the planar length direction L may be equal to the length L3 of the protrusion 121 in the planar length direction L. Here, in the second folding process, the pair of second jigs 133, 134 may be moved so that the pair of second jigs 133, 134 cover both ends 131b, 132b of the pair of first jigs 131, 132 while the first jigs 131, 132 are moved to fold the pouch sheet 10. Accordingly, by securing the pouch sheet 10 through the seating jig 110, the support jig 120, and the pair of first jigs 131, 132, wrinkling of the pouch sheet 10 may be significantly minimized or prevented when the pouch sheet 10 is folded through the pair of second jigs 133, 134.

Here, the pair of first jigs 131, 132 may include a first one side jig 131 located in one side direction of the protrusion 121 of the support jig 120 and a second other side jig 132 located in the other side direction of the protrusion 121. And, the lengths W1, W2 of the pair of second jigs 133, 134 may correspond to the sum of the length W3 of the protruding portion 121 of the support jig 120 facing the second jigs 133, 134, the end length W4 of the first one side jig 131, and the end length W5 of the second other jig 132. In this case, for example, the lengths W1, W2 of the pair of second jigs 133, 134 in the planar width direction W may be equal to the sum of the widths W4, W5 of the pair of first jigs 131, 132 in the planar width direction W and the width W3 of the protrusion 121.

And, the folded portion of the pouch sheet 10 through the first folding process may be folded through the second folding process to form overlapping portions P (see FIG. 5).

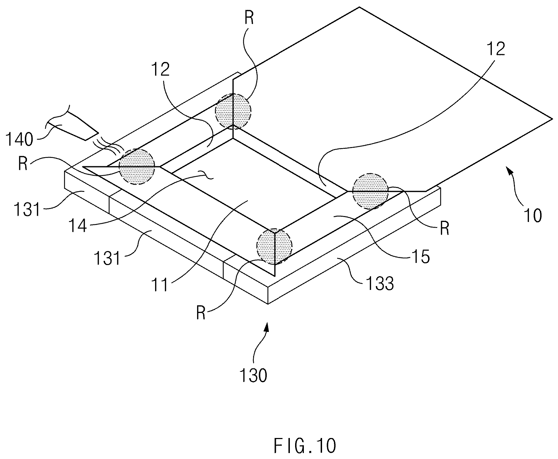

FIG. 10 is a perspective view showing a heating process in a pouch manufacturing method according to an embodiment of the present disclosure.

Referring to FIGS. 5 and 10, in the heating process, thermal fusion may be performed by applying heat to the overlapping portions P of the pouch sheet 10 through a hot air blower 140. Accordingly, it is possible to prevent the overlapping portions P from unraveling after the pouch sheet 10 is folded. Here, thermally fused portions P may be formed in the overlapping portions P of the pouch sheet 10 due to thermal fusion. Here, the heating process may be performed, for example, during the folding process or after the folding process is completed.

In the heating process, heat may be applied to the overlapping portion P where the pouch sheets 10 overlap each other in the terrace 15. That is, when the terrace 15 is formed along the edge of the receiving portion 14 of the pouch sheet 10 formed through the folding process, heat may be applied to the overlapping portion P where the pouch sheets 10 overlap each other in the terrace 15 of the pouch sheet 10 in the heating process to achieve thermal fusion.

In the heating process, hot air may be applied at a temperature of 180 to 220°C. Here, if hot air is applied at a temperature of a lower limit of 180°C or higher in the heating process, thermal fusion may be possible by applying heat above the melting point of the pouch sheet 10 when the outer and inner layers of the pouch sheet 10 include a resin such as polypropylene. On the other hand, by applying hot air at a temperature of an upper limit of 220°C or lower in the heating process, the pouch sheet 10 may be prevented from being damaged by heat. That is, as hot air is applied at a temperature of an upper limit of 220°C or lower in the heating process, it is possible to prevent portions other than the overlapping portion P of the pouch sheet 10 from being melted by heat, or the metal layer located in the center layer of the pouch sheet 10 from being exposed.

Meanwhile, the heating process may be performed, for example, after the folding process.

Additionally, the heating process may be performed, as another example, during and after the folding process. If the heating process is performed even during the folding process, folding of the pouch sheet 10 may be easier.

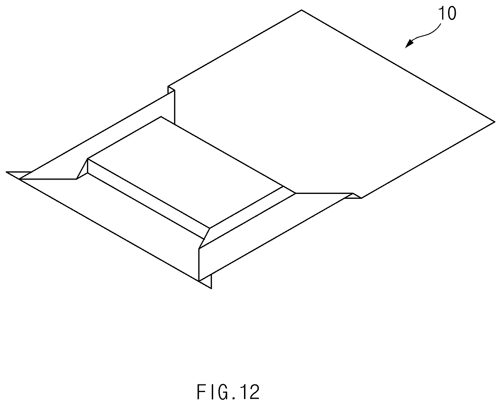

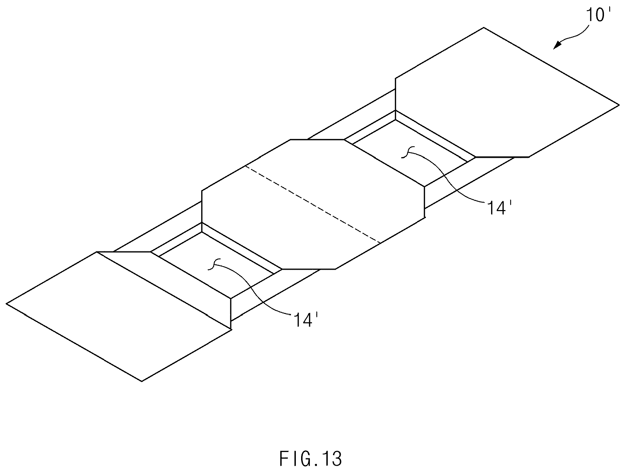

FIG. 11 is a front perspective view showing an example of a pouch sheet folded by a pouch manufacturing method according to an embodiment of the present disclosure, FIG. 12 is a rear perspective view showing an example of a pouch sheet folded by a pouch manufacturing method according to an embodiment of the present disclosure, and FIG. 13 is a front perspective view showing another example of a pouch sheet folded by a pouch manufacturing method according to an embodiment of the present disclosure.

Referring to FIGS. 11 and 12, a pouch manufactured by the pouch manufacturing method according to an embodiment of the present disclosure may be manufactured by folding, as an example, so that one receiving portion 14 is formed in the pouch sheet 10 cut to configure one secondary battery.

Meanwhile, referring to FIG. 13, a pouch manufactured by the pouch manufacturing method according to an embodiment of the present disclosure may be manufactured by folding the pouch sheet 10', as another example, so that a plurality of receiving grooves 14' are formed in the pouch sheet 10'.

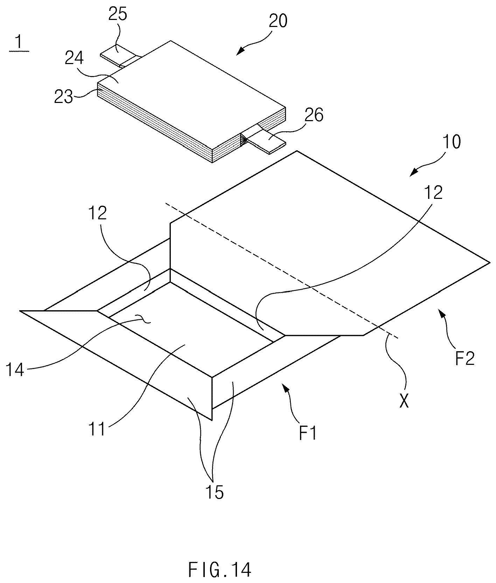

FIG. 14 is a reference view showing a use state in which an electrode assembly is accommodated in a pouch manufacturing method according to an embodiment of the present disclosure.

Referring to FIG. 14, the secondary battery 1 may be formed by accommodating the electrode assembly 20 in the receiving portion 14 of the folded pouch sheet 10. In this case, the secondary battery 1 may be formed by folding the receiving portion 14 formed in the first portion F1 of the pouch sheet 10 along the imaginary line X of the second portion F2 of the pouch sheet 10, and sealing the outer peripheral surface thereof.

The electrode assembly 20 may be in a form where electrodes 23 and separators 24 are alternately stacked. And, the electrode assembly 20 may include electrode leads 25, 26 connected to the electrodes 23.

Referring to FIGS. 11 and 14, in the pouch manufacturing method according to the embodiment of the present disclosure configured as described above, as the receiving portion 14 in which the electrode assembly 20 is accommodated is formed by folding the pouch sheet 10, there is no limit to the forming depth d for accommodating the electrode assembly 20, and there is no forming stretching issue. Therefore, the receiving portion 14 capable of accommodating the high-stack electrode assembly 20 with a large number of stacks may be easily formed in the pouch sheet 10, thereby making it possible to manufacture the high-stack secondary battery 1.

Additionally, referring to FIGS. 4 and 8, the receiving portion 14 may be easily formed in the pouch sheet 10 by folding the pouch sheet 10 through the plurality of folding jigs 130.

Also, referring to FIG. 2, it is possible to prevent the pouch sheet 10 from being wrinkled during folding by moving the plurality of folding jigs 130 first rather than the support jig 120 that presses and secures the pouch sheet 10.

And, referring to FIG. 10, when folding the pouch sheet 10, hot air may be applied to the overlapping sections to thermally fuse them, thereby preventing the unraveling of folding after folding the pouch sheet 10 and firmly maintaining the shape in which the receiving portion 14 is formed.

### Pouch manufacturing device according to embodiment

Hereinafter, a pouch manufacturing device according to an embodiment of the present disclosure will be described.

Referring to FIGS. 1 to 3, the pouch manufacturing device according to an embodiment of the present disclosure includes the seating jig 110 on which the pouch sheet 10 is seated; the support jig 120 that presses and supports the pouch sheet 10 on the opposite side with the pouch sheet 10 interposed therebetween with respect to the seating jig 110; and the plurality of folding jigs 130 that fold the pouch sheet 10 seated on the seating jig 110 to form the receiving portion 14 in which the electrode assembly is accommodated, after securing the pouch sheet 10 through the seating jig 110 and the support jig 120. Additionally, the pouch manufacturing device according to an embodiment of the present disclosure may further include the hot air blower 140 for thermally fusing by applying heat to the overlapping portions P of the pouch sheet 10 (see FIG. 5).

The pouch manufacturing device according to an embodiment of the present disclosure relates to a pouch manufacturing device applied to the pouch manufacturing method according to the above-described embodiment. Therefore, in this embodiment, contents overlapping with the above-described embodiment will be omitted or briefly described, and the differences will be mainly described.

More specifically, referring to FIG. 1, the pouch sheet 10 is seated on the seating jig 110.

As one example, the lower portion of the pouch sheet 10 may be seated on the upper surface of the seating jig 110.

Also, as another example, the pouch sheet 10 may be seated on the upper surface of the seating jig 110 and the upper surface of the folding jig 130. In this case, the pouch sheet 10 may be seated so that the lower surface of the center portion of the pouch sheet 10 is in contact with the upper surface of the seating jig 110.

The pouch sheet 10 may include a metal layer, and a resin layer laminated to the outer and inner sides of the metal layer. The metal layer may include, for example, an aluminum sheet. The resin layer may include, for example, a polypropylene (PP) material.

Referring to FIGS. 2, 5 and 7, the support jig 120 presses and supports the pouch sheet 10 on the opposite side with the pouch sheet 10 interposed therebetween with respect to the seating jig 110 so that the pouch sheet 10 folded through the folding jig 130 is not separated.

The support jig 120 presses the upper surface of the pouch sheet 10 to secure the pouch sheet 10 to the seating jig 110.

The protrusion 121 is formed in a shape where the lower portion of the support jig 120 corresponds to the receiving portion 14, so that when the pouch sheet 10 is folded by the folding jig 130, the folded portion of the pouch sheet 10 may be in close contact with the protrusion 121 of the support jig 120.

The support jig 120 may include the body 122 and the protrusion 121 formed to protrude from the lower portion of the body 122. The protrusion 121 may include the first surface 121a forming a lowermost surface and the second surface 121b forming a lateral surface, and the body 122 may include the third surface 122c forming a lower surface along the edge of the protrusion 121. Here, the protrusion 121 may be formed, for example, as a rectangular prism. And, the height h of the protrusion 121 may correspond to the forming depth d that forms the receiving portion 14 of the pouch sheet 10 (see FIGS. 3 and 11). In this case, the protrusion 121 may be formed, for example, in a shape corresponding to the shape of the receiving portion 14 of the pouch sheet 10.

Referring to FIGS. 2 to 6, the plurality of folding jigs 130 secure the pouch sheet 10 through the seating jig 110 and the support jig 120, and then the pouch sheet 10 seated on the seating jig 110 is folded to form the receiving portion 14 in which the electrode assembly 20 is accommodated (see FIG. 14).

The plurality of folding jigs 130 are located in the lateral direction of the seating jig 110 and moved in a direction closer to each other, and fold the edge of the pouch sheet 10 to form the receiving portion 14, wherein they may be moved in an upward diagonal direction to fold the pouch sheet 10. Here, the edge of the pouch sheet 10 refers to the outer portion of the receiving portion 14, which may be, for example, the terrace 15. The plurality of folding jigs 130 may be moved at an angle of 45 to 85° based on the plane of the pouch sheet 10. The receiving portion 14 of the pouch sheet 10 formed through the folding jig 130 includes the bottom surface 11 formed on a surface facing the first surface 121a of the protrusion 121 and the wall surface 12 formed on a surface facing the second surface 121b of the protrusion 121. And, the terrace 15 facing the third surface 122c may be formed along the edge of the receiving portion 14. Here, the receiving portion 14 formed on the pouch sheet 10 may be formed in a shape corresponding to the protruding portion 121, and may form, for example, a rectangular prism groove that is open upward.

In this case, the folding jig 130 may include the upper pressing surface T1 in contact with the edge of the pouch sheet 10, the side pressing surface T2 formed perpendicular to the upper pressing surface T1, and edge portions 131a, 132a formed between the upper pressing surface T1 and the side pressing surface T2. Meanwhile, the center portion of the pouch sheet 10 is secured through the seating jig 110 and the support jig 120, and then the edge of the pouch sheet 10 may be folded through the folding jig 130. Accordingly, as folding is performed through the folding jig 130 while the center portion of the pouch sheet 10 is secured through the support jig 120, the center portion of the pouch sheet 10 is secured to prevent movement when folding the edge of the pouch sheet 10, thereby minimizing wrinkling of the pouch sheet 10 that may occur during folding.

Referring to FIGS. 5, 8 and 9, the plurality of folding jigs 130 may include the pair of first jigs 131,132 located on both sides of the support jig 120 in any one direction of the width direction and the length direction, and the pair of second jigs 133, 134 located on both sides of the support jig 120 in the other direction of the width direction and the length direction.

The pair of first jigs 131, 132 may be moved to first contact the protrusion 121 of the support jig 120 with the pouch sheet 10 interposed therebetween, and then the pair of second jigs 133, 134 may be moved.

The length of the first jigs 131, 132 may correspond to the length of the protrusion 121 of the support jig 120 facing the first jigs 131, 132. That is, the length of the first jigs 131, 132 in the planar length direction L may be equal to the length of the protrusion 121 facing the first jigs 131, 132 in the length direction L. Here, the pair of second jigs 133, 134 may be moved so that the pair of second jigs 133, 134 cover both ends 131b, 132b of the pair of first jigs 131, 132 while the first jigs 131, 132 are moved to fold the pouch sheet 10. Accordingly, wrinkling of the pouch sheet 10 may be minimized or prevented.

Here, the pair of first jigs 131, 132 may include the first one side jig 131 located in one side direction of the protrusion 121 of the support jig 120 and the second other side jig 132 located in the other side direction of the protrusion 121. And, the lengths W1, W2 of the pair of second jigs 133, 134 may correspond to the sum of the length W3 of the protruding portion 121 of the support jig 120 facing the second jigs 133, 134, the end length W4 of the first one side jig 131, and the end length W5 of the second other jig 132. In this case, for example, the lengths W1, W2 of the pair of second jigs 133, 134 in the planar width direction W may be equal to the sum of the widths W4, W5 of the pair of first jigs 131, 132 in the planar width direction W and the width W3 of the protrusion 121.

And, the folded portion of the pouch sheet 10 through the folding jig 130 may be folded through the second jigs 133, 134 to form overlapping portions P.

Referring to FIGS. 5 and 10, the hot air blower 140 may apply heat to the overlapping portions P of the pouch sheet 10 to thermally fuse them. Accordingly, it is possible to prevent the overlapping portions P from unraveling after the pouch sheet 10 is folded. Here, thermally fused portions P may be formed in the overlapping portions P of the pouch sheet 10 due to thermal fusion.

In this case, the hot air blower 140 may apply heat to the overlapping portion P where the pouch sheets 10 overlap each other in the terrace 15. That is, when the terrace 15 is formed along the edge of the receiving portion 14 of the pouch sheet 10 formed through the folding jig 130, heat may be applied to the overlapping portion P where the pouch sheets 10 overlap each other in the terrace 15 of the pouch sheet 10 by the hot air blower 140to achieve thermal fusion.

And, the hot air blower 140 may apply hot air at a temperature of 180 to 220°C.

The present disclosure has been hereinabove described in detail with specific embodiments, which is intended to describe the present disclosure specifically, and the present disclosure is not limited thereto. The present disclosure may be embodied in different forms by those having ordinary skill in the art within the technical idea of the present disclosure.

Additionally, the specific scope of protection of the present disclosure will be made clear by the appended claims.

### [LIST OF REFERENCE NUMERALS]

1: Secondary battery
10: Pouch sheet
11: Bottom surface
12: Wall surface
14: Receiving portion
15: Terrace
20: Electrode assembly
23: Electrode
24: Separator
25, 26: Electrode lead
110: Seating jig
120: Support jig
121: Protrusion
121a: First surface
121b: Second surface
122: Body
122c: Third surface
130: Folding jig
131, 132: First jig
131a, 132a: Edge portion
131b, 132b: End portion
133, 134: Second jig
133a, 134a: Edge portion
140: Hot air blower
P: Overlapping portion

## Claims

1. A pouch manufacturing method comprising:
a seating process of seating a pouch sheet on a seating jig;
a support process of pressing and supporting the pouch sheet through a support jig located on the opposite side with the pouch sheet interposed therebetween with respect to the seating jig; and
a folding process of securing the pouch sheet through the seating jig and the support jig in the support process, and then moving a plurality of folding jigs and folding the pouch sheet seated on the seating jig to form a receiving portion in which the electrode assembly is accommodated.

2. The pouch manufacturing method according to claim 1,
wherein in the folding process, the plurality of folding jigs located in the lateral direction of the seating jig are moved and the edge of the pouch sheet is folded to form the receiving portion.

3. The pouch manufacturing method according to claim 1,
wherein in the seating process, the pouch sheet is seated on the upper surface of the seating jig and the upper surface of the folding jig, and
in the folding process, the plurality of folding jigs are moved in a direction closer to each other to fold the pouch sheet,
wherein the plurality of folding jigs are moved in an upward diagonal direction to fold the pouch sheet.

4. The pouch manufacturing method according to claim 3,
wherein in the folding process, the plurality of folding jigs are moved at an angle of 45 to 85° based on the plane of the pouch sheet.

5. The pouch manufacturing method according to claim 3,
wherein in the support process, the upper surface of the pouch sheet is pressed through the support jig to secure the pouch sheet to the seating jig, and
in the folding process, a protrusion is formed in a shape where the lower portion of the support jig corresponds to the receiving portion, so that when the pouch sheet is folded by the folding jig, the folded portion of the pouch sheet is in close contact with the protrusion of the support jig.

6. The pouch manufacturing method according to claim 5,
wherein the support jig comprises:
a body; and
the protrusion formed to protrude from the lower portion of the body, and
as the folding jig folds the pouch sheet and brings it into close contact with the lower portion of the body in the folding process, the receiving portion is formed in the pouch sheet.

7. The pouch manufacturing method according to claim 6,
wherein the protrusion comprises a first surface forming a lowermost surface and a second surface forming a lateral surface, and the body comprises a third surface forming a lower surface along the edge of the protrusion,
the receiving portion of the pouch sheet formed through the folding process comprises a bottom surface formed on a surface facing the first surface of the protrusion and a wall surface formed on a surface facing the second surface of the protrusion, and
a terrace facing the third surface is formed along the edge of the receiving portion.

8. The pouch manufacturing method according to claim 7,
wherein the folding jig comprises an upper pressing surface in contact with the edge of the pouch sheet, a side pressing surface formed perpendicular to the upper pressing surface, and edge portions formed between the upper pressing surface and the side pressing surface, and
when the folding jig is moved diagonally and the pouch sheet is brought into close contact with the support jig in the folding process, the pouch sheet is bent by the edge portion of the folding jig, the edge of the pouch sheet is brought into close contact with the third surface of the body in the support jig through the upper pressing surface, and a portion of the pouch sheet is brought into close contact with the second surface of the body in the support jig through the side pressing surface.

9. The pouch manufacturing method according to claim 1,
wherein after securing the center portion of the pouch sheet through the seating jig and the support jig in the support process, the folding process is performed to fold the edge of the pouch sheet through the folding jig.

10. The pouch manufacturing method according to claim 6,
wherein the plurality of folding jigs comprise:
a pair of first jigs located on both sides of the support jig in any one direction of the width direction and the length direction; and
a pair of second jigs located on both sides of the support jig in the other direction of the width direction and the length direction,
wherein the folding process comprises:
a first folding process in which the pair of first jigs are moved to first contact the protrusion of the support jig with the pouch sheet interposed therebetween; and a second folding process in which the pair of second jigs are moved after the first folding process.

11. The pouch manufacturing method according to claim 10,
wherein the length of the first jig corresponds to the length of the protruding portion of the support jig facing the first jig, and
in the second folding process,
the second jig is moved so that the second jig covers both ends of the first jig while the first jig is moved to fold the pouch sheet.

12. The pouch manufacturing method according to claim 10,
wherein the folded portion of the pouch sheet through the first folding process is folded through the second folding process to form overlapping portions, and
the pouch manufacturing method further comprises a heating process of thermally fusing by applying heat to the overlapping portions of the pouch sheet through a hot air blower.

13. The pouch manufacturing method according to claim 12,
wherein a terrace is formed along the edge of the receiving portion of the pouch sheet formed through the folding process, and
in the heating process, heat is applied to the overlapping portions of the pouch sheet in the terrace of the pouch sheet.

14. The pouch manufacturing method according to claim 12,
wherein in the heating process, hot air is applied at a temperature of 180 to 220°C.

15. A pouch manufacturing device comprising:
a seating jig on which the pouch sheet is seated;
a support jig that presses and supports the pouch sheet on the opposite side with the pouch sheet interposed therebetween with respect to the seating jig; and
a plurality of folding jigs that fold the pouch sheet seated on the seating jig to form a receiving portion in which the electrode assembly is accommodated, after securing the pouch sheet through the seating jig and the support jig.

16. The pouch manufacturing device according to claim 15,
wherein the plurality of folding jigs are located in the lateral direction of the seating jig and moved in a direction closer to each other, and fold the edge of the pouch sheet to form the receiving portion, wherein they are moved in an upward diagonal direction to fold the pouch sheet.

17. The pouch manufacturing device according to claim 16,
wherein the support jig presses the upper surface of the pouch sheet to secure the pouch sheet to the seating jig, and
a protrusion is formed in a shape where the lower portion of the support jig corresponds to the receiving portion, so that when the pouch sheet is folded by the folding jig, the folded portion of the pouch sheet is in close contact with the protrusion of the support jig.

18. The pouch manufacturing device according to claim 17,
wherein the support jig comprises:
a body; and
the protrusion formed to protrude from the lower portion of the body,
wherein the protrusion comprises a first surface forming a lowermost surface and a second surface forming a lateral surface, and the body comprises a third surface forming a lower surface along the edge of the protrusion,
the receiving portion of the pouch sheet formed through the folding jig comprises a bottom surface formed on a surface facing the first surface of the protrusion and a wall surface formed on a surface facing the second surface of the protrusion, and
a terrace facing the third surface is formed along the edge of the receiving portion.

19. The pouch manufacturing device according to claim 15,
wherein the center portion of the pouch sheet is secured through the seating jig and the support jig, and then the edge of the pouch sheet is folded through the folding jig.

20. The pouch manufacturing device according to claim 17,
wherein the plurality of folding jigs comprise:
a pair of first jigs located on both sides of the support jig in any one direction of the width direction and the length direction; and
a pair of second jigs located on both sides of the support jig in the other direction of the width direction and the length direction,
wherein the pair of first jigs are moved to first contact the protrusion of the support jig with the pouch sheet interposed therebetween, and then the pair of second jigs are moved.

21. The pouch manufacturing device according to claim 20,
wherein the folded portion of the pouch sheet through the pair of first jigs is folded through the pair of second jigs to form overlapping portions, and
the pouch manufacturing device further comprises a hot air blower for thermally fusing by applying heat to the overlapping portions of the pouch sheet.

22. The pouch manufacturing device according to claim 20,
wherein the length of the first jig corresponds to the length of the protruding portion of the support jig facing the first jig, and
the second jig is moved to cover both ends of the first jig while the first jig is moved to fold the pouch sheet, and folds the pouch.

23. The pouch manufacturing device according to claim 22,
wherein the first jig comprises a first one side jig located in one side direction of the protrusion and a second other side jig located in the other side direction of the protrusion, and
the length of the second jig corresponds to the sum of the length of the protruding portion of the support jig facing the second jig, the end length of the first one side jig, and the end length of the first other side jig.
